## Europäisches Patentamt
## European Patent Office
## Office européen des brevets

(11) Veröffentlichungsnummer: **0 257 500**
**B1**

(12) **EUROPÄISCHE PATENTSCHRIFT**

(45) Veröffentlichungstag der Patentschrift:
**25.10.89**

(21) Anmeldenummer: **87111857.6**

(22) Anmeldetag: **17.08.87**

(51) Int. Cl.⁴: **B60H 1/24**, F24F 13/06

(54) **Luftleitvorrichtung.**

(30) Priorität: **21.08.86 DE 3628449**

(43) Veröffentlichungstag der Anmeldung:
**02.03.88 Patentblatt 88/9**

(45) Bekanntmachung des Hinweises auf die Patenterteilung:
**25.10.89 Patentblatt 89/43**

(84) Benannte Vertragsstaaten:
**DE ES FR GB IT SE**

(56) Entgegenhaltungen:
**DE-A- 2 031 986**
**DE-A- 3 541 066**
**DE-U- 1 981 148**
**FR-A- 2 082 702**

**PATENT ABSTRACTS OF JAPAN, Band 6,**
**N. 213 (M-167)[1091], 26. Oktober 1982; &**
**JP-A-57 118 913 (NIPPON DENSO K.K.) 24-07-1982**

(73) Patentinhaber: **Gebr. Happich GmbH,**
**Postfach 10 02 49 Clausenbrücke 1,**
**D-5600 Wuppertal 1(DE)**

(72) Erfinder: **Loitz, Joachim-Günther, Henselweg 37,**
**D-5600 Wuppertal 1(DE)**
Erfinder: **Schwermer, Armin B., Mastweg 215,**
**D-5600 Wuppertal 12(DE)**

ACTORUM AG

## Beschreibung

Die Erfindung bezieht sich auf eine Luftleitvorrichtung, insbesondere für Fahrzeuge, mit den Merkmalen des Oberbegriffs des Anspruchs 1. Eine derartige Luftleitvorrichtung ist aus der Druckschrift JP-A 57 118 913 bekannt.

Bei Luftleitvorrichtungen der angegebenen Art ist im allgemeinen nur eine Parallelverstellung der Lamellen möglich, obgleich es in verschiedener Hinsicht von Vorteil wäre, die Luftströmungen individuell ausrichten und leiten zu können.

Der vorliegenden Erfindung liegt die Aufgabe zugrunde, eine Luftleitvorrichtung der gattungsgemäßen Art so weiterzubilden, daß eine individuelle Ausrichtbarkeit der Lamellen erreicht wird, wobei sich die Luftleitvorrichtung insbesondere dadurch auszeichnen soll, daß sie aus nur wenigen einfach und kostengünstig herzustellenden und zu montierenden Teilen besteht.

Gemäß der Erfindung wird diese Aufgabe durch die im Kennzeichenteil des Patentanspruchs 1 angegebenen Merkmale gelöst.

Durch die erfindungsgemäßen Maßnahmen wurde eine Luftleitvorrichtung geschaffen, die aus nur wenigen, kostengünstig und einfach herzustellenden und einfach zu bedienenden Einzelteilen besteht und die eine den jeweiligen Anforderungen gerecht werdende Ausrichtung der Lamellen ermöglicht, wodurch sich eine optimale Luftverteilung erzielen läßt.

Vorteilhafte Ausgestaltungen und Weiterbildungen der Erfindung sind in den Unteransprüchen gekennzeichnet.

Ein Ausführungsbeispiel der Erfindung wird nachfolgend anhand der Zeichnung näher erläutert. Es zeigen:

Fig. 1 die Luftleitvorrichtung in einem Horizontalschnitt,

Fig. 2 eine Ansicht der Luftleitvorrichtung entsprechend der Pfeilrichtung II in Fig. 1,

Fig. 3 eine Einzelheit der Erfindung und

Fig. 4 bis 8 die Luftleitvorrichtung nach Fig. 1 mit jeweils unterschiedlicher Lamellenausrichtung.

Die neue Luftleitvorrichtung weist ein Gehäuse 1 mit einer Frontplatte 2, Seitenwänden 3, einer Bodenwand 4 und einer nicht dargestellten Kopfwand auf. Das Gehäuse 1 ist vorzugsweise als einstückiges Kunststoff-Spritzgußteil ausgebildet.

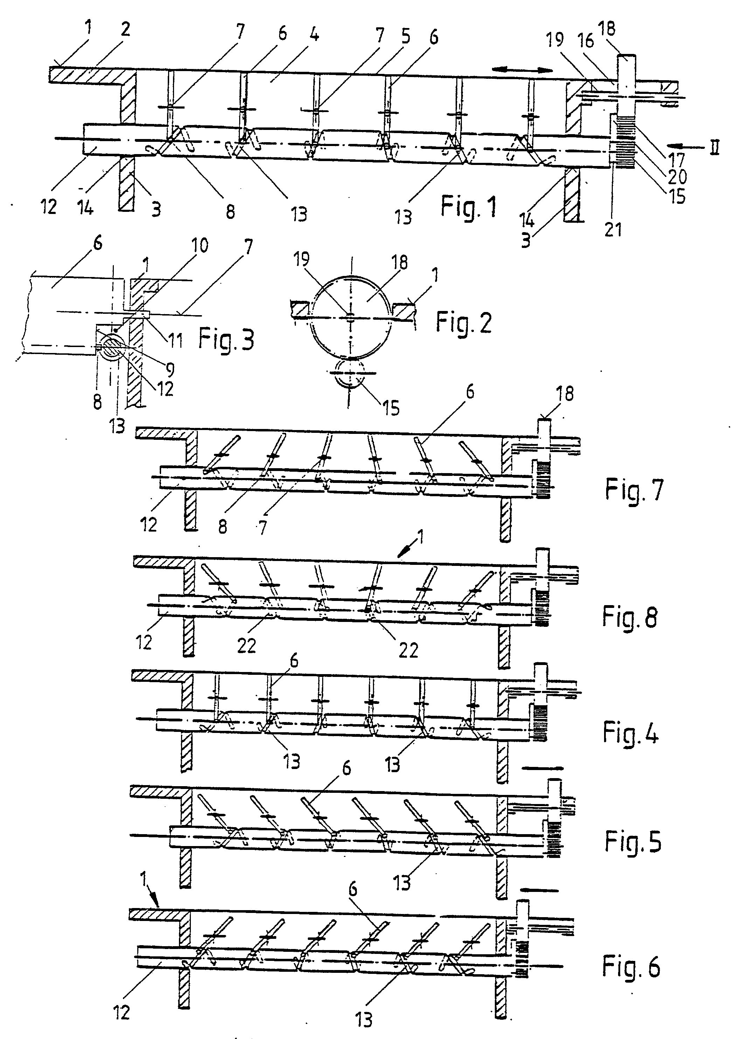

In dem Gehäusehohlraum 5 ist eine Gruppe von Lamellen 6 angeordnet, derart, daß jede Lamelle 6 um ihre Längsmittelachse 7 verschwenkbar zwischen der Bodenwand 4 und der Kopfwand gelagert ist. Jede Lamelle 6 weist an einem Stirnende ein Führungselement auf, das zweckmäßigerweise aus einem Nocken 8 besteht und von der Längsmittelachse 7 beabstandet ist. Die als Führungselemente dienenden Nocken 8 sind parallel zur Schwenkachse 7 der Lamellen 6 ausgerichtet und befinden sich jeweils am Boden 9 einer stufenförmigen Absetzung 1o der entsprechenden Lamellenstirnenden (Fig. 3). Die Lamellen 6 sind zweckmäßigerweise einstückig mit den Nocken 8 und mit Achszapfen 11 als Kunststoff-Spritzgußteile ausgebildet.

Zu der neuen Luftleitvorrichtung gehört eine Verstelleinrichtung, die eine Welle 12 umfaßt, die parallel zu den die Lamellen 6 lagernden Gehäusewänden verläuft, die im Gehäuse 1 sowohl drehbeweglich als auch axial verschiebbar gelagert ist und die mit einer der Anzahl der Lamellen 6 entsprechenden Anzahl von Gegenführungselementen ausgerüstet ist, welche gewindegangartig, jedoch mit voneinander abweichender Steigung und Richtung ausgebildet sind. Zweckmäßigerweise sind die Gegenführungselemente gewindegangartige Kulissenführungen 13. Die Kulissenführungen 13 sind dabei so ausgelegt, daß jede Lamelle 6 gegenüber jeder anderen Lamelle 6 einen anderen Bewegungsablauf erhält. Die Welle 12 durchsetzt Bohrungen 14 in den Seitenwänden 3 und weist einendig ein Ritzel 15 auf. Die Welle 12 ist bevorzugt einstückig mit dem Ritzel 15 als Kunststoff-Spritzgußteil ausgebildet.

Das Ritzel 15 steht mit einer aus einer Gehäuseöffnung 16 heraustretenden, eine axiale und radiale Verstellung der Welle 12 ermöglichenden Handhabe in Verbindung, die bevorzugterweise als mit einem Zahnsegment 17 versehenes Stellrad 18 ausgebildet ist, wobei das Zahnsegment 17 mit dem Ritzel 15 kämmt. An dem Stellrad 18, das um die Achse 19 gedreht und in Doppelpfeilrichtung verschoben werden kann, ist ein als Mitnehmer und als Axialsicherung dienender Materialansatz 2o angeformt, der das Zahnsegment 17 radial überragt und in eine sich an das Ritzel 15 anschließende Ringnut 21 der Welle 12 eingreift.

Fig. 1 zeigt ebenso wie Fig. 4 die Grundstellung der Lamellen 6 der neuen Luftleitvorrichtung. Die Lamellen 6 sind in dieser, gegebenenfalls durch eine Raste od.dgl. lösbar festzulegenden Grundstellung, parallel zueinander ausgerichtet. Unter Aufrechterhaltung dieser Parallelausrichtung können die Lamellen 6, wie in den Fig. 5 und 6 gezeigt, nach links oder rechts verstellt werden, wozu es lediglich erforderlich ist, das Stellrad 18 in die eine oder andere der in Fig. 1 mit Doppelpfeil angegebenen Richtungen zu verschieben. Aus der Grundstellung der Lamellen 6 gemäß Fig. 1 und 4 können die Lamellen 6 durch eine Drehbewegung des Stellrades 18 weiterhin so verstellt werden, daß sie in Ausströmrichtung konvergieren oder divergieren, wie dies durch Fig. 7 und 8 verdeutlicht ist. Einer Sperrwirkung der Nocken 8 in den Kulissenführungen 13 wird dabei durch Führungserweiterungen 22 entgegengewirkt.

## Patentansprüche

1. Luftleitvorrichtung, insbesondere für Fahrzeuge, bestehend aus einem Gehäuse (1) mit einer daran angeordneten Gruppe von Lamellen (6), die verschwenkbar geführt werden, und aus einer mit den Führungen der Lamellen in Eingriff stehenden Verstelleinrichtungen, die eine parallel zu den Gehäusewänden (4) gelagerte Welle (12) umfaßt, wobei die Welle (12) drehbeweglich gelagert ist und am Umfang Führungsnuten als Gegenführungselemente aufweist, die mit den Führungen der Lamellen in Eingriff stehen, dadurch gekennzeichnet, daß jede Lamelle (6) um ihre Längsmittelachse (7) zwischen den parallel zueinander verlaufenden Gehäusewänden (4) gelagert ist, daß jede Lamelle (6) weiterhin, von der Längsmittelachse (7) beabstandet, an einem Stirnende ein Führungselement aufweist, daß die Welle (12) auch axial verschiebbar gelagert ist, daß die Anzahl der Gegenführungselemente der Anzahl der Lamellen entspricht, und daß die Steigung und Richtung der Gegenführungselemente voneinander abweicht, so daß die Führungs- und Gegenführungselemente derart miteinander in Eingriff stehen, daß wahlweise eine parallele, eine konvergierende oder eine divergierende Ausrichtung der Lamellen (6) einstellbar ist.

2. Luftleitvorrichtung nach Anspruch 1, dadurch gekennzeichnet, daß die Führungselemente der Lamellen (6) jeweils aus einem Nocken (8) bestehen und daß die Gegenführungselemente an der Welle (12) als darin eingelassene gewindeartige Kulissenführungen (13) ausgebildet sind.

3. Luftleitvorrichtung nach Anspruch 1 oder 2, dadurch gekennzeichnet, daß die Welle (12) einendig mit einer aus einer Gehäuseöffnung (16) heraustretenden, eine axiale und radiale Verstellung der Welle (12) ermöglichenden Handhabe verbunden ist.

4. Luftleitvorrichtung nach Anspruch 3, dadurch gekennzeichnet, daß die Handhabe als mit einem Zahnsegment (17) versehenes Stellrad (18) ausgebildet ist, das mit einem am entsprechenden Wellenende angeordneten Ritzel (15) kämmt.

5. Luftleitvorrichtung nach einem oder mehreren der vorangegangenen Ansprüche, dadurch gekennzeichnet, daß die Welle (12) materialeinheitlich und einstückig mit den Gegenführungselementen und dem Ritzel (15) ausgebildet ist.

6. Luftleitvorrichtung nach einem oder mehreren der Ansprüche 1 bis 5, dadurch gekennzeichnet, daß die Welle (12) aus einem Kunststoff-Spritzgußteil besteht.

7. Luftleitvorrichtung nach einem oder mehreren der Ansprüche 1 bis 6, dadurch gekennzeichnet, daß die als Führungselemente dienenden Nocken (8) parallel zur Schwenkachse (7) der Lamellen (6) ausgerichtet sind und sich jeweils am Boden (9) einer die Welle (12) bereichsweise aufnehmenden stufenförmigen Absetzung (1o) der entsprechenden Lamellenstirnenden befinden.

8. Luftleitvorrichtung nach einem oder mehreren der vorangegangenen Ansprüche, dadurch gekennzeichnet, daß das Stellrad (18) mit einem das Zahnsegment (17) überragenden Materialansatz (2o) ausgebildet ist, der in eine sich an das Ritzel (15) anschließende Ringnut (21) der Welle (12) eingreift.

## Claims

1. An air-directing device, especially for vehicles, comprising a housing (1) with a group of slats (6) arranged thereon which are pivotably guided, and an adjusting device, in engagement with the guides of the slats, which comprises a shaft (12) mounted parallel with the housing walls (4), the shaft (12) being rotatably mounted and comprising guide grooves on the circumference as counterguide elements which are in engagement with the guides of the slats, characterised in that each slat (6) is mounted about its longitudinal central axis (7) between the housing walls (4) extending parallel with one another, that each slat (6) furthermore comprises a guide element at one end which is spaced from the longitudinal central axis (7), that the shaft (12) is also axially displaceably mounted, that the number of the counter-guide elements corresponds to the number of slats, and that the pitch and direction of the counter-guide elements differ from one another so that the guide and counter-guide elements are in engagement with one another in such a way that, according to choice, it is possible to set a parallel, a converging or diverging orientation of the slats (6).

2. An air-directing device according to Claim 1, characterised in that the guide elements of the slats (6) each comprise a dog (8) and that the counter-guide elements are formed on the shaft (12) as thread-type slideway guides (13) let into the shaft.

3. An air-directing device according to Claim 1 or 2, characterised in that the shaft (12) is connected at one end to a handle which protrudes from a housing opening and renders possible axial and radial shifting of the shaft (12).

4. An air-directing device according to Claim 3, characterised in that the handle is formed as a setting wheel (18) provided with a toothed segment (17) and meshing with a pinion (15) arranged on the corresponding shaft end.

5. An air-directing device according to any one or more of the preceding Claims, characterised in that the shaft (12) is made in uniform in material and integral with the counter-guide elements and the pinion (15).

6. An air-direction device according to any one or more Claims 1 to 5, characterised in that the shaft (12) is made of a synthetic plastics material injection-moulding.

7. An air-directing device according to any one or more of Claims 1 to 6, characterised in that the dogs (8) serving as guide elements are arranged parallel to the pivot axis (7) of the slats (6) and are located each on the bottom (9) of an offset portion (10) of step-form of the corresponding slat ends which locally receives the shaft (12).

8. An air-directing device according to any one or more of the preceding Claims, characterised in that the setting wheel (18) is formed with an added material portion (20) protruding beyond the toothed segment (17), which portion engages in an annular groove (21) of the shaft (12) adjoining the pinion (15).

## Revendications

1. Dispositif de guidage d'air, en particulier pour véhicules, se composant d'un carter (1), avec un groupe de lamelles (6) fixées dessus, guidées de manière pivotante, et d'un dispositif de déplacement en prise sur le guidage des lamelles, comprenant un arbre (12) monté parallèlement aux parois de carter (4), l'arbre (12) étant monté mobile en rotation et présentant à la périphérie, pour éléments de contre-guidage, des gorges de guidage qui sont en prise avec les guidages des lamelles, caractérisé en ce que chaque lamelle (6) est montée sur son axe médian longitudinal (7), entre les parois de carter (4) s'étendant parallèlement l'une par rapport à l'autre, en ce que chaque lamelle (6) présente en outre sur une extrémité frontale un élément du guidage situé à distance de l'axe médian longitudinal (7), en ce que l'arbre (12) est également monté mobile axialement, en ce que le nombre des contre-éléments de guidage correspond au nombre des lamelles, et en ce que le pas et le sens des éléments de contre-guidage s'écartent les uns des autres, de façon que les éléments de guidage et de contre-guidage soient conjointement en prise de sorte qu'une orientation des lamelles (6) parallèle, convergente ou divergente soit réglable au choix.

2. Dispositif de guidage d'air selon la revendication 1, caractérisé en ce que les éléments de guidage des lamelles (6) se composent chaque fois d'une came (8) et en ce que les éléments de contre-guidage sont réalisés sur l'arbre sous forme de guidage à coulisse (13) introduits à l'intérieur de celle-ci.

3. Dispositif de guidage d'air selon la revendication 1 ou 2, caractérisé en ce que l'arbre (12) est relié à une extrémité à une manette sortant d'un orifice de carter (16), permettant un déplacement axial et radial de l'arbre (12).

4. Dispositif de guidage d'air selon la revendication 3, caractérisé en ce que la manette est réalisée sous forme d'une roue de réglage (18) pourvue d'un segment denté (17) engrenant avec un pignon (15) disposé sur l'extrémité d'arbre correspondante.

5. Dispositif de guidage d'air selon une ou plusieurs des revendications précédentes, caractérisé en ce que l'arbre (12) est réalisé dans la même matière et d'une seule pièce avec les éléments de contre-guidage et le pignon (15).

6. Dispositif de guidage d'air selon une ou plusieurs des revendications précéntes 1 à 5, caractérisé en ce que l'arbre (12) se compose d'une partie en matière plastique coulée par injection.

7. Dispositif de guidage d'air selon une ou plusieurs des revendications précédentes 1 à 6, caractérisé en ce que les cames (8) servant d'élément de guidage sont orientées parallèlement à l'axe de pivotement (7) des lamelles (6) et se trouvent chaque fois sur le fond (9) d'un décrochement (10) de forme étagée des extrémités frontales de lamelles correspondantes, logeant l'arbre par zones.

8. Dispositif de guidage d'air selon une ou plusieurs des revendications précédentes, caractérisé en ce que la roue de réglage (18) est réalisée avec un appendice de matière (20) émergeant au-dessus du segment denté (17), qui vient en prise dans une gorge annulaire (21) de l'arbre (12), se raccordant au pignon (15).

Fig. 1

Fig. 2

Fig. 3

Fig. 7

Fig. 8

Fig. 4

Fig. 5

Fig. 6